(19)

Europäisches
Patentamt
European
Patent Office
Office européen
des brevets

(11) **EP 2 578 181 B1**

(12) **EUROPEAN PATENT SPECIFICATION**

(45) Date of publication and mention
of the grant of the patent:
**10.08.2016 Bulletin 2016/32**

(51) Int Cl.:
*A61C 5/04* *(2006.01)*   *B05C 17/01* *(2006.01)*
*B65D 83/00* *(2006.01)*   *B05C 17/005* *(2006.01)*
*A61C 5/06* *(2006.01)*

(21) Application number: **11786268.0**

(22) Date of filing: **21.04.2011**

(86) International application number:
**PCT/JP2011/002342**

(87) International publication number:
**WO 2011/148564 (01.12.2011 Gazette 2011/48)**

(54) **CARTRIDGE-TYPE DISPENSER**

SPENDER MIT PATRONE

DISTRIBUTEUR DE TYPE À CARTOUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2010 JP 2010122721**

(43) Date of publication of application:
**10.04.2013 Bulletin 2013/15**

(73) Proprietors:
• **Kuraray Noritake Dental Inc.
Kurashiki-shi,
Okayama 710-0801 (JP)**
• **Yoshino Kogyosho Co., Ltd.
Tokyo 136-8531 (JP)**

(72) Inventors:
• **TERAKAWA, Eiichi
Tokyo 100-8115 (JP)**

• **NAKAO, Taizo
Kurashiki-shi
Okayama 710-0801 (JP)**
• **TOMA, Toru
Tokyo 136-8531 (JP)**

(74) Representative: **Gray, James et al
Withers & Rogers LLP
4 More London Riverside
London SE1 2AU (GB)**

(56) References cited:
**EP-A1- 0 051 790     EP-A2- 0 919 206
EP-A2- 1 147 747     WO-A2-2008/005654
JP-A- 8 301 366     JP-A- 11 036 571
JP-A- 63 138 976     JP-A- 2000 283 023**

**Description**

TECHNICAL FIELD

The present invention relates to a cartridge-type dispenser suitable for extruding viscous materials such as composite resin used for dental treatment or the like, wherein a contents-extruding piston does not fall easily out of a dispenser main body and yet is capable of extruding the contents with a smooth action.

BACKGROUND ART

Paste materials with high viscosity, such as composite resin and adhesive agent, are often used in dental treatment or the like and generally extruded from a syringe-type dispenser or a cartridge-type dispenser. In the syringe-type dispenser, contents are extruded from a nozzle by applying a push-in force to a plunger fitted in a syringe main body to slide the plunger in the syringe main body. On the other hand, in the cartridge-type dispenser wherein a piston is arranged in a cartridge main body (referred to below simply as a "main body"), the contents are extruded by fitting the main body to a separately prepared push-in tool (trigger-type push-in tool) and pushing in the piston. (Refer, e.g., to Patent Document 1 identified below.)

In particular, in the cartridge-type dispenser, the contents filled in the main body are disposed once used in a single treatment, and from perspectives of quality assurance and hygiene, a dispenser of this type is frequently used in recent years. However, since there is a variation and the like in molding accuracy of the piston and the main body which constitute the dispenser, in case where a diameter size of the piston is small, the piston can be easily disengaged from the main body. On the other hand, in case where the diameter size of the piston is large, although this case has an advantage of improved airtightness, the piston can be disengaged from the main body due to an increase in an inner pressure when the piston is installed after the contents have been filled in, and as a result, assembly becomes laborious, and moreover, an operation of extruding the contents can be slowed down, which sometimes causes malfunction in which the contents cannot be smoothly extruded.

(Patent Document)

Patent Document 1: JP 2001-057987A.
Patent Document 2: EP 0 919 206 discloses a dental cartridge having an attachable delivery portion.
Patent Document 3: EP 0 051 790 discloses a distributor for pasty material.
Patent Document 4: EP 1 147 747 discloses a dental capsule for placement of ultra-high viscosity dental composite material. Patent Document 5: WO 2008/005654 discloses a dispenser and piston for dispensing a liquid material and method of making a piston.

DISCLOSURE OF THE INVENTION

(Technical Problem)

It is an objective of the present invention to provide a cartridge-type dispenser suitable for extruding viscous materials, wherein a piston does not easily fall out and yet is capable of extruding contents with a smooth action.

(Solution to Problem)

The present invention is solved according to claim 1 and provides a cartridge-type dispenser comprising: a cartridge main body defining a filling space for contents and provided with an extrusion nozzle at a front end portion of the cartridge main body; and a piston slidably arranged in the filling space of the cartridge main body and configured to cause the contents of the filling space to be extruded from an end of the extrusion nozzle in response to application of a push-in force. The piston includes: a trunk portion having an outer circumferential wall arranged opposite to an inner circumferential wall of the cartridge main body so as to define a gap therebetween; a front end wall portion provided at one end portion of the trunk portion in direct contact with the contents of the filling space; and a rear end wall portion provided at another end portion of the trunk portion to be pressed with a rod of a push-in tool for the application of the push-in force to the piston itself. The outer circumferential wall of the trunk portion is provided with a longitudinal ribbed protrusion, which is in contact with the inner circumferential wall of the cartridge main body to form a sliding part of the piston without sealing off an interior of the cartridge main body.

(Advantageous Effects of the Invention)

Provision of a protrusion on the trunk portion of the piston, as a sliding part of the piston, makes it possible to reduce the contact area between the piston and the inner circumferential wall of the main body. Accordingly, even when the piston is firmly fitted to the main body at the sliding part to prevent the piston from being easily disengaged from the main body, the piston is able to slide smoothly, thereby improving operability. Furthermore, a tiny gap is formed between the piston and the main body in a part of the piston other than the sliding part. As a result, when the piston is assembled after the contents are filled in, air remaining in the main body is discharged to the outside through the gap, and the inner pressure is not increased.

With an hourglass shape of the trunk portion of the piston having the reduced diameter at the middle portion in the push-in direction of the piston, it is possible to further reduce the contact area between the piston and the inner circumferential wall of the main body.

Furthermore, when the sizes of the one end portion and the other end portion of the trunk portion of the piston are $D_1$ and $D_2$ (where $D_1$ is closer to a front end portion, and $D_2$ is closer to a rear end portion), and the size of the interior of the main body is X, it is preferable that a difference between the sizes $D_1$, $D_2$ and X, i.e. the gap formed between the main body and the trunk portion of the piston, satisfies the conditions $X - D_1 \leq 1$ mm and $X - D_2 \leq 1$ mm, because in this case the contents are in a good state of preservation for a longer period of time. Here, from the perspective of securing the gap, it is preferable that $0.01$ mm $\leq X - D_1 \leq 1$ mm and $0.01$ mm $\leq X - D_2 \leq 1$ mm. It is further preferable that $0.02$ mm $\leq X - D_1 \leq 0.5$ mm and $0.02$ mm $\leq X - D_2 \leq 0.5$ mm. It is most preferable that $0.04$ mm $\leq X - D_1 \leq 0.2$ mm and $0.04$ mm $\leq X - D_2 \leq 0.2$ mm.

Moreover, when the sizes of the one end portion and the other end portion of the trunk portion of the piston, inclusive of the protrusion, are $D_3$ and $D_4$ (where $D_3$ is closer to the front end portion, and $D_4$ is closer to the rear end portion), it is preferable that a difference between the sizes $D_3$, $D_4$ and X, i.e. the size when the protrusion is fitted to the main body, satisfies $D_3 - X \geq 0.01$ mm and $D_4 - X \geq 0.01$ mm, because in this case the piston is further prevented from disengagement. Here, from the perspective of achieving a smooth sliding movement, it is preferable that $0.5$ mm $\geq D_3 - X \geq 0.01$ mm and $0.5$ mm $\geq D_4 - X \geq 0.01$ mm. It is further preferable that $0.3$ mm $\geq D_3 - X \geq 0.05$ mm and $0.3$ mm $\geq D_4 - X \geq 0.05$ mm. It is most preferable that $0.26$ mm $\geq D_3 - X \geq 0.10$ mm and $0.26$ mm $\geq D_4 - X \geq 0.10$ mm. On the other hand, when a total length of the piston in the push-in direction is $D_5$, the length $D_5$ needs to be determined as appropriate, because an appropriate length of $D_5$ depends on a length of the interior of the main body in the push-in direction, as well as a stroke of the push-in tool.

## BRIEF DESCRIPTION OF DRAWINGS

FIG. 1A shows a general embodiment of a dispenser according to the present invention in a cross sectional lateral view, and FIG. 1B shows the general embodiment of the dispenser according to the present invention when the dispenser shown in FIG. 1A is viewed from a rear end wall thereof.

FIG. 2 is a perspective appearance view of a piston arranged in the dispenser shown in FIGS. 1A and 1B, with three protrusions provided on a cylindrical trunk portion thereof.

FIG. 3 shows another example of the piston which is not part of the present invention in which middle sections of the protrusions provided in the piston are removed to divide the ribs into upper and lower end sections so as to further reduce the contact area between the piston and the main body.

FIG. 4 shows another example of the piston which is not part of the present invention in which the protrusions are provided in a portion of the piston other than the end portions thereof with respect to FIG. 3.

FIG. 5 shows another example of the piston which is not part of the present invention in which a single protrusion is helically formed.

FIG. 6 shows another example of the piston which is not part of the present invention in which the trunk portion of the piston is depressed so that the piston does not make contact with the main body even when the piston itself is deformed.

FIG. 7 shows another example of the piston favorably applicable to the present invention in which the protrusions provided in the upper and lower end portions of the piston shown in FIG. 6 are joined.

## DESCRIPTION OF PREFERRED EMBODIMENTS

The present invention will be described below in further detail, with reference to the accompanying drawings.

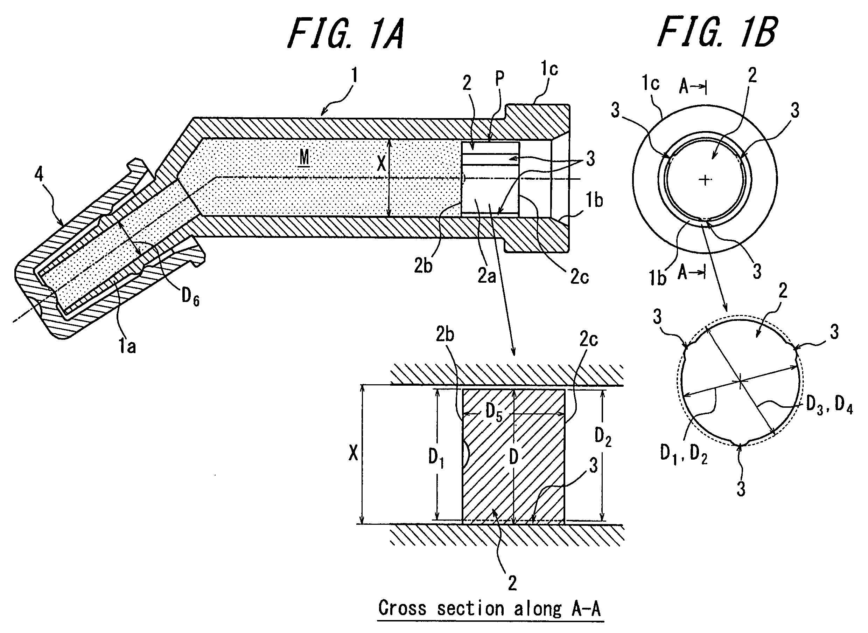

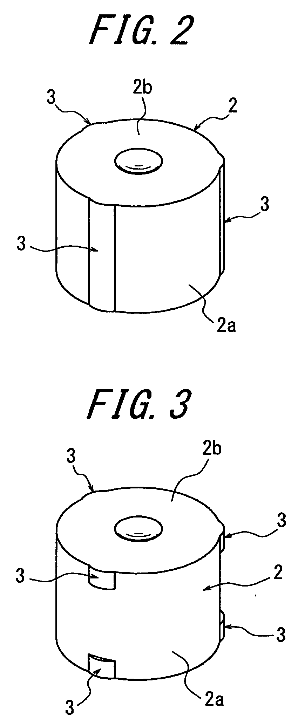

FIGS. 1A and 1B show a general structure of a dispenser according to the present invention in a cross sectional view, and FIG. 2 is a perspective appearance view of a piston arranged in the dispenser shown in FIGS. 1A and FIG. 1B.

Reference numeral 1 in the drawings denotes a main body defining a filling space M for contents. The main body 1 can be made of high-density polyethylene (HDPE), low-density polyethylene (LDPE), polypropylene (PP), acryl, polyethylene terephthalate (PET), polyoxy-methylene (POM), polybutylene terephthalate (PBT), and the like. The main body 1 includes at a front end portion thereof an integrally formed extrusion nozzle 1a and also includes around an outer circumferential wall of a rear end opening 1b thereof a flange 1c for linkage to a separately prepared push-in tool (not shown). The main body 1 is preferably made of PBT, in particular.

Reference numeral 2 denotes the piston arranged in the main body 1. The piston 2 has a trunk portion 2a having an outer circumferential wall arranged opposite to an inner circumferential wall of the main body 1 so as to define a gap therebetween, a front end wall portion 2b provided at one end portion of the trunk portion 2a in direct contact with the contents of the filling space M, and a rear end wall portion 2c provided at another end portion of the trunk portion 2a to be pressed with a rod (not shown) of a push-in tool for application of a push-in force to the piston 2 itself. As the trunk portion 2a of the piston 2, a cylinder having sizes (diameters) $D_1$ and $D_2$ at the one end portion and the other end portion (where $D_1$ is closer to the front end wall portion 2b, and $D_2$ is closer to the rear end wall portion 2c) and a size D in the middle portion of the trunk portion 2a in a push-in direction is used, where $D_1$, $D_2$, and D are equal.

Reference numeral 3 denotes longitudinal ribbed protrusions integrally formed on the trunk portion 2a of the piston 2. The protrusions 3 are provided at three positions on the outer circumferential wall at regular intervals such that an end of each protrusion 3 contacts the inner circumferential wall of the main body 1 for sliding in the main body 1 in conjunction with a movement of the piston 2. Furthermore, sizes $D_3$ and $D_4$ of the piston 2 at the one end portion and the other end portion (where $D_3$ is closer to the front end wall portion 2b, and $D_4$ is closer to the rear end wall portion 2c), inclusive of the protrusions 3, are larger than an inner diameter X of the main body 1. The material for the piston 2 may comprise elastomer, rubber, LDPE (such as linear low density polyethylene (LLDPE)), HDPE, PP, acryl, and the like. Among others, LDPE is preferably used.

Reference numeral 4 denotes a nozzle cap mounted on the extrusion nozzle 1a to close off an extrusion orifice of the extrusion nozzle 1a. In the embodiments illustrated in the drawings the nozzle cap 4 is linked by engagement means, such as undercuts. Alternatively, however, the nozzle cap 4 may be screwed by a thread. A fitting effect provided by the above engagement means or screw structure allows positioning of the cap, to thereby facilitate the assembling and prevent disengagement of the cap when the cap is loosely mounted and also prevent damage to the cap when the cap is tightly or deeply mounted.

In case where the nozzle cap 4 is provided with the fitting effect, it is preferable to employ a hardly deformable nozzle cap 4. The reason is that, although an easily deformable nozzle cap 4 has an advantage that it can be mounted even when the size is not precisely set, such an easily deformable cap tends to be disengaged or to be damaged. In order to restrict deformation of the nozzle cap 4 and provide the nozzle cap 4 with the fitting effect with the extrusion nozzle 1a, HDPE, LDPE, PP, acryl, and the like can be used as the material of the nozzle cap 4, and in particular, HDPE is preferably used.

An outer diameter of the extrusion nozzle 1a is preferably as small as possible in the dental treatment, and therefore the inner diameter $D_6$ is necessarily small. As for the inner diameter $D_6$ of the extrusion nozzle 1a, it is preferable that $0.01 \leq D_6 / X \leq 0.60$, and it is further preferable that $0.25 \leq D_6 / X \leq 0.55$.

In the dispenser with the above structure, when the piston 2 is fitted to the main body 1, a contact part between the piston 2 and the main body 1 is formed only by the protrusions 3. Accordingly, the piston 2 is able to slide smoothly even in a fitting state (i.e. the state in which the piston 2 cannot undergo disengagement) where the protrusions 3 are in a tight contact with the inner circumferential wall of the main body 1.

A tiny gap P is formed between the piston 2 and the main body 1 in a region where the protrusions 3 are not provided (refer to FIG. 1A). When the piston 2 is gradually pushed in to be fitted to the main body 1 after the contents have been filled in, air remaining in the main body 1 is discharged through the gap into the outside, and an inner pressure is not increased. As a result, the piston 2 is prevented from being disengaged from the main body 1 due to an increase in the inner pressure.

FIGS. 3 to 6 show different embodiments of the piston which are not part of the present invention.

FIG. 3 shows the piston 2 in which the protrusions 3 are provided at the end portions of the trunk portion 2a of the piston 2 while a shape of the trunk portion 2a remains cylindrical. In this case, contact of the piston 2 with the main body 1 is made at the protrusions 3 provided at a front end portion and a rear end portion of the piston 2. Accordingly, a contact area is further reduced, and operability is further improved.

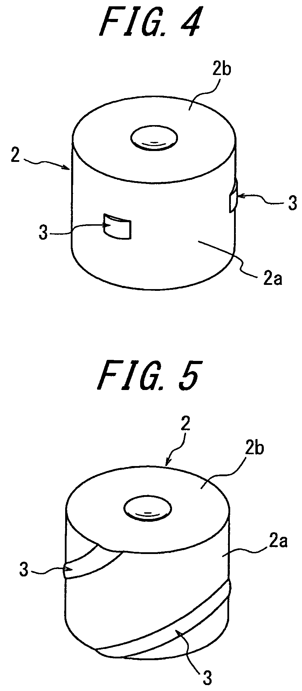

FIG. 4 shows the piston 2 in which the protrusions 3 are provided in a portion of the trunk portion 2a other than the end portions thereof while the shape of the trunk portion 2a remains cylindrical. In this case, as in FIG. 3, the contact area is further reduced, and operability is further improved.

FIG. 5 shows the piston 2 in which the single protrusion 3 is helically formed while the shape of the trunk portion 2a remains cylindrical, which shows an example of the smallest number of the protrusion still satisfying demand characteristics of the present invention.

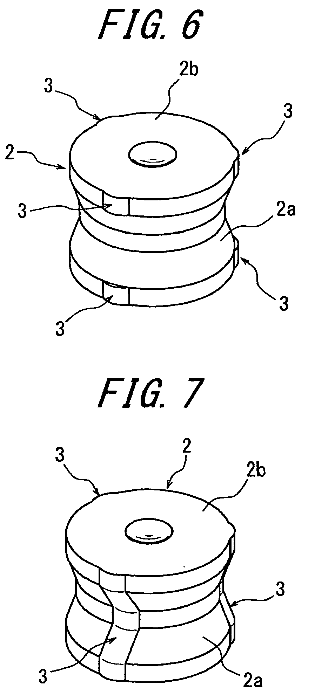

FIGS. 6 and 7 show the pistons 2 in each of which the size (diameter) D in the middle portion of the trunk portion 2a in a longitudinal direction thereof is minimized with respect to the sizes (diameters) $D_1$, $D_2$ ($D_1 = D_2$) at the end portions of the trunk portion 2a, so that the trunk portion 2a has an hourglass-shaped cross section tapering from the end portions toward the middle portion in the longitudinal direction.

In each of the pistons 2 shown in FIGS. 6 and 7 with the hourglass-shaped trunk portion 2, as in FIG. 3, the contact of the piston 2 with the main body 1 is made at the protrusions 3 provided at the front end portion and the rear end portion of the piston 2. Accordingly, the contact area is further reduced, and operability is further improved.

The protrusions 3 are provided over an entire length of the trunk portion 2a, of the piston 2.

In addition, although the drawings show the examples of one, three, and six protrusions 3 provided along a circumference of the trunk portion 2a, the number of the protrusions is not specifically limited.

< Examples >

The following describes examples of the present invention. However, the present invention is not limited to the examples described below.

As the cartridge-type dispensers, the bodies made of PBT and the pistons made of the materials described below were prepared, and a vibration test, a depressurization test, a loading test, and a curing test were conducted to evaluate performance of each dispenser.

• Vibration Test

The main body fitted with a piston was laid on a pan secured to a vibration machine (TUBE MIXER TRIO HM-2F manufactured by As One Corporation) and vibrated for one minute at a dial reading of 10, and presence of disengagement of the piston from the main body was checked.

• Depressurization Test

An extrusion nozzle was filled with CLEARFIL™ PHOTO CORE (manufactured by Kuraray Medical Inc.) and irradiated with light for twenty seconds with JET-LITE 3000 (manufactured by Morita Corporation) to be cured, and thus the extrusion nozzle was closed off. Subsequently, the piston was fitted to the main body and laid for three minutes at 70 Torr, and the presence of disengagement of the piston from the main body was checked.

• Loading Test

A piston was fitted to the main body and pushed in at a cross-head speed of 100 mm/min with AUTOGRAPH (AGS-G 500N manufactured by Shimazu Corporation), and a maximum load value measured before the front end wall portion 2b of the piston comes into contact with the inner circumferential wall of the main body was measured as a force required for pushing in the piston.

• Curing Test

The main body was filled with CLEARFIL PHOTO CORE and fitted with the piston and then irradiated from the direction of the piston with light for one minute with JET-LITE 3000, and presence of curing of the filler was checked.

• Inventive Example 1

The main body with X = 4.42 mm, and the piston made of acryl and having a shape as shown in FIG. 3 with $D_1$ (= $D_2$)= 4.30 mm, $D_3$ (= $D_4$) = 4.60 mm, and $D_5$ = 6.80 mm were molded. Table 1 shows the results of evaluation.

• Inventive Example 2

The main body with X = 4.42 mm, and the piston made of LDPE and having a shape as shown in FIG. 7 with $D_1$ (= $D_2$) = 4.30 mm, $D_3$ (= $D_4$) = 4.60 mm, and $D_5$ = 6.80 mm were molded. Table 1 shows the results of evaluation.

• Comparative Example 1

The main body with X = 4.42 mm, and the piston made of LDPE without the protrusion and with $D_1$ (= $D_2$) = 4.30 mm and $D_5$ = 6.80 mm were molded. Table 1 shows the results of evaluation.

• Comparative Example 2

The main body with X = 4.42 mm, and the piston made of LDPE without the protrusion and with $D_1$ (= $D_2$) = 4.54 mm and $D_5$ = 3.40 mm were molded. Table 1 shows the results of evaluation.

Table 1

|  | Inventive Examples | | Comparative Examples | |
|---|---|---|---|---|
|  | 1 | 2 | 1 | 2 |
| Material of main body | PBT | | | |
| Inner diameter size (X) of main body (mm) | 4.42 | | | |
| Material of piston | Acryl | LDPE | | |
| Shape of piston | FIG. 3 | FIG. 7 | Without protrusion | |
| Diameter ($D_1$) of trunk portion of piston (mm) | 4.30 | 4.30 | 4.30 | 4.54 |
| Diameter ($D_3$) of trunk portion of piston, inclusive of protrusion (mm) | 4.60 | 4.60 | N/A | N/A |
| X - $D_1$ (mm) | 0.12 | 0.12 | 0.12 | -0.12 |
| $D_3$ - X (mm) | 0.18 | 0.18 | N/A | N/A |
| Piston total length ($D_5$) in push-in direction (mm) | 6.80 | 6.80 | 6.80 | 3.40 |
| Vibration test (piston disengagement from main body) | No | No | Yes | No |
| Depressurization test (piston disengagement from main body) | No | No | No | Yes |
| Loading test (N) | 16 | 14 | 0 | 106 |
| Curing test (occurrence of curing of filler) | No | No | No | No |

It will be appreciated from Table 1 that, in the cartridge-type dispenser in which the piston is not provided with the protrusion on an outer surface thereof and the piston has a diameter smaller than the inner diameter of the main body, the piston easily underwent disengagement in response to the vibration. Furthermore, in the cartridge-type dispenser in which the piston is not provided with the protrusion on the outer surface thereof and the piston has a diameter larger than the inner diameter of the main body, although the piston was not disengaged in response to the vibration, the piston inevitably underwent disengagement when the inner pressure increased, and moreover, the load measured at the time of pushing in the piston was remarkably large. On the other hand, in the cartridge-type dispenser according to the present invention, the piston did not undergo disengagement even when the vibration was applied and when the inner pressure was increased, and the load measured at the time of pushing in the piston was confirmed to be small.

INDUSTRIAL APPLICABILITY

The present invention provides a cartridge-type dispenser suitable for extruding viscous materials that is capable of ensuring a smooth operation of extruding contents while preventing a piston from being easily disengaged from a main body.

(Reference Numerals)

1 Main body
1a Extrusion nozzle
1b Rear end opening
1c Flange
2 Piston
2a Trunk portion
2b Front end wall portion

2c    Rear end wall portion
3     Protrusion
4     Nozzle cap
M     Filling space
P     Gap formed by piston and main body

**Claims**

1.  A cartridge-type dispenser comprising: a cartridge main body (1) defining a filling space for contents and provided with an extrusion nozzle (1a) at a front end portion of the cartridge main body; and a piston (2) slidably arranged in the filling space of the cartridge main body (1) and configured to cause the contents of the filling space to be extruded from an end of the extrusion nozzle (1a) in response to application of a push-in force, wherein:

    the piston (2) includes (i) a trunk portion (2a) having an outer circumferential wall arranged opposite to an inner circumferential wall of the cartridge main body (1) so as to define a gap therebetween, (ii) a front end wall portion (2b) provided at one end portion of the trunk portion (2a) in direct contact with the contents of the filling space, and (iii) a rear end wall portion (2c) provided at another end portion of the trunk portion (2a) to be pressed with a rod of a push-in tool for application of the push-in force to the piston (2); **characterised in that**
    the outer circumferential wall of the trunk portion is provided with a longitudinal ribbed protrusion (3), which is in contact with the inner circumferential wall of the cartridge main body (1) to form a sliding part of the piston (2) without sealing off an interior of the cartridge main body (1).

2.  The cartridge-type dispenser of claim 1, wherein the trunk portion (2a) of the piston (2) has an hourglass shape having a reduced diameter at a middle portion thereof in a push-in direction of the piston (2).

3.  The cartridge-type dispenser of claim 1 or 2, which satisfies the following conditions:

$$X - D_1 \leq 1 \text{ mm};$$

    and

$$X - D_2 \leq 1 \text{ mm}$$

    where $D_1$ and $D_2$ represent, respectively, dimensions at one end portion and the other end portion of the trunk portion (2a) of the piston (2), and X represents an inner dimension of the cartridge main body (1).

4.  The cartridge-type dispenser of any one of claims 1 to 3, which satisfies the following conditions:

$$D_3 - X \geq 0.01 \text{ mm};$$

    and

$$D_4 - X \geq 0.01 \text{ mm}$$

    where $D_3$ and $D_4$ represent, respectively, dimensions at one end portion and the other end portion of the trunk portion (2a) of the piston (2), inclusive of the protrusion (3), and X represents an inner dimension of the cartridge main body (1).

**Patentansprüche**

1.  Spender mit Patrone, umfassend: einen Patronenhauptkörper (1), der einen Füllraum für Inhalt definiert und der mit einer Extrusionsdüse (1a) an einem vorderen Bereich des Patronenhauptkörpers versehen ist; einen Kolben (2), der in dem Füllraum des Patronenhauptkörpers (1) verschiebbar angeordnet ist und derart konfiguriert ist, dass dieser in Reaktion auf die Anwendung einer Einschubkraft bewirkt, dass der Inhalt des Füllraums aus einem Ende der Extrusionsdüse (1a) extrudiert wird, wobei:

der Kolben (2)

(i) einen Rumpfbereich (2a) aufweist, mit einer äußeren Umfangswand, die einer inneren Umfangswand des Patronenhauptkörpers (1) gegenüberliegt, so dass dazwischen ein Spalt definiert wird, (ii) einen Wandabschnitt (2b) an dem vorderen Ende, der an einem Endbereich des Rumpfbereichs (2a) vorgesehen ist und sich in direktem Kontakt mit dem Inhalt des Füllraums befindet, und (iii) einen Wandabschnitt (2c) an dem hinteren Ende, der an einem anderen Endbereich des Rumpfbereichs (2a) vorgesehen ist und der durch eine Stange eines Einschubwerkzeugs mit Druck beaufschlagt wird, um eine Einschubkraft auf den Kolben (2) auszuüben; **dadurch gekennzeichnet, dass** die äußere Umfangswand des Rumpfbereichs mit einem längsgerippten Vorsprung (3) versehen ist, der sich mit der inneren Umfangswand des Patronenhauptkörpers (1) in Kontakt befindet, um einen Schiebeteil des Kolbens (2) zu bilden, ohne einen Innenraum des Patronenhauptkörpers (1) abzuschotten.

2. Spender mit Patrone gemäß Anspruch 1, wobei der Rumpfbereich (2a) des Kolbens (2) die Form einer Sanduhr hat, mit einem verringerten Durchmesser in seinem in der Einschubrichtung des Kolbens (2) mittleren Bereich.

3. Spender mit Patrone gemäß Anspruch 1 oder 2, der die folgenden Bedingungen erfüllt:

$$X - D_1 \leq 1 \text{ mm};$$

und

$$X - D_2 \leq 1 \text{ mm},$$

wobei $D_1$ und $D_2$ jeweils Abmessungen an dem einen Endbereich und an dem anderen Endbereich des Rumpfbereichs (2a) des Kolbens (2) angeben und wobei X eine Innenabmessung des Patronenhauptkörpers (1) angibt.

4. Spender mit Patrone gemäß einem der Ansprüche 1 bis 3, der die folgenden Bedingungen erfüllt:

$$D_3 - X \geq 0{,}01 \text{ mm};$$

und

$$D_4 - X \geq 0{,}01 \text{ mm},$$

wobei $D_3$ und $D_4$ jeweils Abmessungen an dem einen Endbereich und an dem anderen Endbereich des Rumpfbereichs (2a) des Kolbens (2) einschließlich des Vorsprungs (3) angeben und wobei X eine Innenabmessung des Patronenhauptkörpers (1) angibt.

**Revendications**

1. Distributeur de type à cartouche comprenant : un corps principal de cartouche (1) définissant un espace de remplissage pour des contenus et doté d'une buse d'extrusion (1a) sur une partie d'extrémité avant du corps principal de cartouche ; et un piston (2) agencé de manière coulissante dans l'espace de remplissage du corps principal de cartouche (1) et configuré pour amener les contenus de l'espace de remplissage à être extrudés d'une extrémité de la buse d'extrusion (1a) en réponse à l'application d'une force d'enfoncement, dans lequel :

le piston (2) comporte (i) une partie de tronc (2a) présentant une paroi circonférentielle extérieure agencée en regard d'une paroi circonférentielle intérieure du corps principal de cartouche (1) de sorte à définir une fente entre elles, (ii) une partie de paroi d'extrémité avant (2b) prévue sur une partie d'extrémité de la partie de tronc (2a) en contact direct avec les contenus de l'espace de remplissage et (iii) une partie de paroi d'extrémité arrière (2c) prévue sur une autre partie d'extrémité de la partie de tronc (2a) à presser avec une tige d'un outil d'enfoncement pour l'application de la force d'enfoncement sur le piston (2) ; **caractérisé en ce que** la paroi circonférentielle extérieure de la partie de tronc est dotée d'une saillie nervurée longitudinale (3) qui est en contact avec la paroi circonférentielle intérieure du corps principal de cartouche (1) pour former une partie coulissante du piston (2) sans sceller un intérieur du corps principal de cartouche (1).

2.  Distributeur de type à cartouche selon la revendication 1, dans lequel la partie de tronc (2a) du piston (2) a une forme de sablier présentant un diamètre réduit sur une partie médiane de celui-ci dans une direction d'enfoncement du piston (2).

3.  Distributeur de type à cartouche selon la revendication 1 ou 2, qui satisfait aux conditions suivantes :

$$X - D_1 \leq 1 \text{ mm} ;$$

et

$$X - D_2 \leq 1 \text{ mm}$$

où $D_1$ et $D_2$ représentent respectivement des dimensions sur une partie d'extrémité et l'autre partie d'extrémité de la partie de tronc (2a) du piston (2) et X représente une dimension intérieure du corps principal de cartouche (1).

4.  Distributeur de type à cartouche selon l'une quelconque des revendications 1 à 3, qui satisfait aux conditions suivantes :

$$D_3 - X \geq 0,01 \text{ mm} ;$$

et

$$D_4 - X \geq 0,01 \text{ mm}$$

où $D_3$ et $D_4$ représentent respectivement des dimensions sur une partie d'extrémité et l'autre partie d'extrémité de la partie de tronc (2a) du piston (2), y compris la saillie (3) et X représente une dimension intérieure du corps principal de cartouche (1).

## FIG. 1A

## FIG. 1B

Cross section along A-A

EP 2 578 181 B1

*FIG. 2*

*FIG. 3*

# FIG. 4

# FIG. 5

# FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001057987 A
- EP 0919206 A
- EP 0051790 A
- EP 1147747 A
- WO 2008005654 A